# EUROPÄISCHE PATENTANMELDUNG

(11) **EP 2 683 046 A1**
(43) Veröffentlichungstag der Anmeldung: **08.01.2014**
(21) Anmeldenummer: 12175115.0
(22) Anmeldetag: 05.07.2012
(51) Int. Cl.: H02H 5/04

(54) **Vorrichtung zum Schutz eines Verbrauchers vor einer Überlast sowie Herstellverfahren einer Komponente der Vorrichtung**

(71) Anmelder: Siemens Aktiengesellschaft, 80333 München (DE)
(72) Erfinder: Birner, Wolfgang, 92272 Freudenberg (DE); Pfitzner, Klaus, 92224 Amberg (DE); Rösch, Bernhard, 92237 Sulzbach-Rosenberg (DE)

(57) **Zusammenfassung**

Die Erfindung betrifft eine Vorrichtung (1) zum Schutz eines Verbrauchers (2) vor einer Überlast. Um eine verbesserte Vorrichtung (1) bereitzustellen, welche insbesondere hinsichtlich ihrer thermischen Belastung optimiert ausgebildet ist, wird vorgeschlagen, dass eine Überwachungseinrichtung der Vorrichtung (1) eine Temperaturmesseinheit (18), eine Auswerteeinheit (4) und einen in Serie mit dem Verbraucher geschalteten Messwandler (Widerstand 10), welcher die erste Leitung (101) mit der zweiten Leitung (102) elektrisch leitend verbindet, umfasst, wobei die Temperaturmesseinheit (18) eine Temperatur des Messwandlers (10) erfassen kann, wobei die Auswerteeinheit (4) mittels der erfassten Temperaturen der Temperaturmesseinheit (18) ein zeitliches Erwärmungsverhalten des Messwandlers (10) ermitteln kann und durch eine Auswertung des ermittelten zeitlichen Erwärmungsverhaltens des Messwandlers (10) eine anstehende Überlast am Verbraucher (2) ermitteln kann, wobei an der mechanischen und elektrischen Verbindungsstelle des Messwandlers (10) mit der ersten und/oder zweiten Leitung (101,102)
- der Messwandler (10) eine Beschichtung (5) aufweist, oder
- der Messwandler (10) oder die erste und/oder zweite Leitung plattiert ist, oder
- jeweils ein Plättchen (6) zwischen dem Messwandler (10) und der ersten und/oder zweiten Leitung (101,102) angeordnet ist um eine mechanische und elektrische Verbindung zwischen dem Messwandler durch Löten oder Schweissen zu erleichtern.

## Beschreibung

Die Erfindung betrifft eine Vorrichtung zum Schutz eines Verbrauchers vor einer Überlast, insbesondere einer thermischen Überlast. Ferner betrifft die Erfindung ein Herstellverfahren einer Komponente der Vorrichtung.

Ein Verbraucher ist insbesondere ein Elektromotor (z.B. Asynchronmotor). Eine thermische Überlast am Verbraucher entsteht durch einen überhöhten Stromfluss. Ein überhöhter Stromfluss kann beispielsweise durch eine mechanische Überlast an einem Elektromotor oder durch einen Ausfall einer oder zweier Strompfade (Phasen) des Elektromotors hervorgerufen werden. Hierbei kommt es zu einer unerwünschten Temperaturentwicklung am Verbraucher, was letztendlich zu einer Beschädigung des Verbrauchers führen kann.

Zur Ermittlung einer anstehenden thermischen Überlast eines elektrischen Verbrauchers werden meist Vorrichtungen in den Strompfad, über welchen der Verbraucher mit elektrischer Energie versorgt wird, integriert, so dass mittels dieser Vorrichtungen eine anstehende thermische Überlast detektiert werden kann. Hierbei kann eine einphasige aber auch eine mehrphasige Überwachung erfolgen, d.h. es kann ein einzelner Strompfad (eine Phase) aber auch mehrere Strompfade (mehrere Phasen) des Verbrauchers überwacht werden.

Die entsprechenden Vorrichtungen weisen je zu überwachenden Strompfad eine Strombahn auf, über welche die über den Strompfad erfolgende Energieversorgung des Verbrauchers geführt wird. Die elektrische Energie des Verbrauchers wird somit mittels der Strombahn durch die Vorrichtung geleitet. Mittels einer Überwachungseinrichtung der Vorrichtung wird der Stromfluss der Strombahn überwacht, so dass eine anstehende Überlast des Verbrauchers detektiert werden kann. Derartige Vorrichtungen sind beispielsweise Überlastrelais oder Leistungsschalter. Ein Leistungsschalter weist für einen nachgeschalteten Verbraucher neben einem Schutz vor einer thermischen Überlast durch einen A-Auslöser ferner einen Kurzschlussschutz durch einen N-Auslöser auf.

Die Vorrichtung der vorliegenden Anmeldung soll insbesondere einen Überlastschutz für Verbraucher (z.B. Elektromotoren, Leitungen, Transformatoren und Generatoren) bereitstellen.

An eine Vorrichtung zur Ermittlung einer thermischen Überlast eines Verbrauchers können unterschiedliche Anforderungen gestellt werden:
- Die Vorrichtung soll möglichst sowohl AC- als auch DC-Ströme überwachen können, so dass sowohl AC- als auch DC-Verbraucher auf Überlast überwacht werden können.
- Die Vorrichtung soll einen möglichst großen Einstellbereich aufweisen. Der Einstellbereich ist der Bereich, in welchen eine Überwachung des Betriebsstromes des elektrischen Verbrauchers erfolgen kann. Er wird durch die Betriebsstromobergrenze I_{O} und Betriebsstromuntergrenze I_{U} begrenzt (I_{O} zu I_{U}). Mittels eines Einstellmittels (z.B. Einstellschraube) an der Vorrichtung kann die Vorrichtung auf den jeweiligen Nennstrom des Verbrauchers eingestellt werden, so dass eine gezielte Überwachung des nachgeschalteten zu überwachenden Verbrauchers erfolgen kann.
- Die Vorrichtung soll eine möglichst geringe Verlustleistung erzeugen.
- Die Vorrichtung soll eine möglichst einfache galvanische Trennung zwischen der zu überwachenden Strombahn und der Überwachungseinrichtung, welche die Überlast detektiert, aufweisen.
- Die Vorrichtung soll ein thermisches Gedächtnis besitzen. D.h. wird eine anstehende thermische Überlast eines Verbrauchers ermittelt, so sollte die Stromzufuhr zum Verbraucher solange unterbrochen werden, bis ein Abkühlen des Verbrauchers sichergestellt ist. Es sollte somit kein sofortiges Zuschalten eines Verbrauchers nach einer ermittelten thermischen Überlast ermöglicht werden.

Bei einer anstehenden thermischen Überlast eines Verbrauchers kommt es in den einzelnen Strompfaden (Phasen) des Verbrauchers zu einem erhöhten Stromanstieg. Die dem Verbraucher vorgeschaltete Vorrichtung zur Überwachung einer thermischen Überlast des Verbrauchers kann folglich durch eine Überwachung seiner Strombahn diesen erhöhten Stromanstieg detektieren und auswerten. Hierfür können unterschiedliche Messprinzipien angewandt werden. Die Ermittlung einer anstehenden Überlast kann somit mittels unterschiedlicher Überwachungseinrichtungen der Vorrichtung erfolgen. Überwachungseinrichtungen zur Detektion einer Überlast eines Verbrauchers umfassen üblicherweise je zu überwachende Phase des Verbrauchers an der entsprechenden Strombahn einen Bimetallauslöser, einen Stromwandler oder einen Shunt.

Bei einer Überwachung mittels eines Bimetallauslösers wird die zu überwachende Strombahn mit einem Bimetallauslöser derart gekoppelt, dass es durch den Stromanstieg zu einer Erwärmung des Bimetallauslösers und letztendlich zu einer räumlichen Auslenkung eines Teils des Bimetallauslösers kommt. Diese Auslenkung wird detektiert und weiter ausgewertet. Mittels eines Bimetallauslösers können sowohl Gleichströme als auch Wechselströme erfasst werden. Nachteilig am Bimetallauslöser ist, dass er eine hohe Verlustleistung generiert. Das thermische Gedächtnis und die galvanische Trennung zwischen den einzelnen Strompfaden (Phasen) sind bei dem Bimetallauslöser hingegen mit geringem Aufwand zu realisieren.

Bei einer Überwachung mittels eines Stromwandlers ermittelt der jeweilige Stromwandler den Stromfluss seiner Strombahn, so dass eine Auswerteeinheit eine weiterführende Analyse des Stromflusses durchführen und letztendlich eine anstehende Überlast detektieren kann. Nachteilig an dieser Messmethode ist, dass keine DC-Ströme erfasst werden können. Ein thermisches Gedächtnis kann jedoch durch die Stromwandler selbst nicht nachgebildet werden.

Bei einer Überwachung mittels eines Shunts ist der Shunt in der Strombahn integriert, so dass über diesen ein den Stromfluss charakterisierender Spannungsabgriff erfolgen kann. Durch eine nachgeschaltete Analyse der am Shunt anliegenden Spannung kann eine anstehende thermische Überlast ermittelt werden. Mittels eines Shunt-Messverfahrens ist eine Erfassung von AC/DC-Strömen möglich. Nachteilig an dem Messverfahren mittels eines Shunts ist, dass durch den Spannungsabgriff am Shunt kein thermisches Gedächtnis nachgebildet wird und die galvanische Trennung der einzelnen Phasen nur mit großem Aufwand möglich ist.

Der Erfindung liegt die Aufgabe zugrunde, eine verbesserte Vorrichtung bereitzustellen mit welcher eine Ermittlung einer anstehenden Überlast eines Verbrauchers erfolgen kann. Insbesondere soll die Vorrichtung und insbesondere ihre Strombahn hinsichtlich ihrer thermischen und elektrischen Belastungen optimiert ausgebildet sein. Ebenso soll vorzugsweise ein günstiges Kostenniveau aufgrund beherrschbarer Fertigungsprozesse und kostengünstiger Werkstoffe ermöglicht werden. Die Vorrichtung soll ferner vorzugsweise sowohl Gleichströme als auch Wechselströme überwachen können. Ebenso soll vorzugsweise eine einfache galvanische Trennung der Überwachungseinrichtung von der zu überwachenden Strombahn ermöglicht werden.

Mindestens eine dieser Aufgaben wird gelöst durch eine Vorrichtung gemäß Anspruch 1; d.h. durch eine Vorrichtung zum Schutz eines elektrischen Verbrauchers vor einer Überlast, wobei die Vorrichtung eine erste Strombahn, welche eine erste und zweite Leitung und eine Überwachungseinrichtung, zur Ermittlung der anstehenden Überlast des elektrischen Verbrauchers, umfasst, wobei die Überwachungseinrichtung eine Temperaturmesseinheit, eine Auswerteeinheit und einen Messwandler, welcher die erste Leitung mit der zweiten Leitung elektrisch leitend verbindet, umfasst, wobei die Temperaturmesseinheit eine Temperatur des Messwandlers erfassen kann, wobei die Auswerteeinheit mittels der erfassten Temperaturen der Temperaturmesseinheit ein zeitliches Erwärmungsverhalten des Messwandlers ermitteln kann und durch eine Auswertung des ermittelten zeitlichen Erwärmungsverhaltens des Messwandlers eine anstehende Überlast am Verbraucher ermitteln kann, wobei an der mechanischen und elektrischen Verbindungsstelle des Messwandlers mit der ersten und/oder zweiten Leitung
- der Messwandler eine Beschichtung aufweist,
- der Messwandler oder die erste und/oder zweite Leitung plattiert ist, oder
- jeweils ein Plättchen zwischen dem Messwandler und der ersten und/oder zweiten Leitung angeordnet ist,
sowie durch ein Herstellverfahren gemäß Anspruch 15, d.h. durch ein Herstellverfahren einer Komponente der Vorrichtung nach einem der Ansprüche 1 bis 13, wobei
- der Messwandler an der Verbindungsstelle zur ersten und/oder zweiten Leitung beschichtet oder plattiert wird und die erste und/oder zweite Leitung an die beschichtete oder plattierte Verbindungsstelle des Messwandlers gelötet wird,
- die erste und/oder zweite Leitung an der Verbindungsstelle zum Messwandler plattiert wird und der Messwandler an die plattierte Verbindungsstelle der ersten und/oder zweiten Leitung geschweißt wird, oder
- ein erstes Plättchen zwischen dem Messwandler und der ersten Leitung angeordnet wird und der Messwandler an eine Stelle des ersten Plättchen geschweißt wird und die erste Leitung an eine andere Stelle des ersten Plättchen gelötet wird und/oder ein zweites Plättchen zwischen dem Messwandler und der zweiten Leitung angeordnet wird und der Messwandler an eine Stelle des zweiten Plättchen geschweißt wird und die zweite Leitung an eine andere Stelle des zweiten Plättchen gelötet wird,
so dass eine mechanische und elektrisch leitende Verbindung zwischen dem Messwandler und der ersten und/oder zweiten Leitung hergestellt wird.

Vorteilhafte Weiterbildungen der Erfindung sind in den abhängigen Ansprüchen 2 bis 14 angegeben.

Die erste Strombahn ist insbesondere ein Teil einer Zuleitung einer Energieversorgung des Verbrauchers. Die Zuleitung wird ebenso Hauptstrombahn oder Phase genannt. Im aktiven Betrieb des Verbrauchers (z.B. Elektromotor) fließt durch die erste Strombahn und somit durch den Messwandler ein zeitabhängiger Motorstrom, welcher im Messwandler in Abhängigkeit von der Stromhöhe und der Stromflusszeit zu einer definierten Erwärmung des Messwandlers (strombedingte Erwärmung) führt. Bei einer anstehenden Überlast des Verbrauchers ist das thermische Verhalten des Messwandlers gegenüber dem thermischen Verhalten im Standardbetrieb des Verbrauchers charakteristisch. Insbesondere liegt bei einer anstehenden Überlast am Verbraucher gegenüber dem Standardbetrieb des Verbrauchers am Messwandler eine erhöhte Temperatur vor.

Die Ermittlung, ob eine Überlast am Verbraucher bevorsteht erfolgt mittels einer Auswertung der strombedingten Erwärmung am Messwandler. Der Überlastzustand der Vorrichtung liegt vor, wenn die Temperatur am Messwandler bzw. ein hieraus abgeleiteter Wert einen Überlasttemperaturschwellwert T_{Ü}, welcher eine bevorstehende Überlast am Verbraucher charakterisiert, überschreitet.

Der Normalzustand der Vorrichtung liegt vor, wenn die Temperatur am Messwandler unterhalb des Überlasttemperaturschwellwerts T_{Ü} liegt. Im Normalzustand der Vorrichtung weist der Verbraucher somit den ordnungsgemäßen Betrieb auf.

Durch die Temperaturmesseinheit, insbesondere durch einen Temperaturfühler der Temperaturmesseinheit, kann die Temperatur des Messwandlers erfasst und der Auswerteeinheit bereitgestellt werden. Seitens der Auswerteeinheit kann anhand der erfassten Temperaturen der Temperaturmesseinheit das charakteristische Erwärmungsverhalten des Messwandlers ermittelt und ausgewertet werden, so dass hieraus eine anstehende Überlast am Verbraucher erkannt wird.

Durch die Auswerteeinheit erfolgt vorzugsweise eine Analyse der ermittelten Temperatur des Messwandlers über die Zeit, so dass hieraus eine anstehende Überlast am Verbraucher erkannt werden kann. Hierfür wird vorzugsweise das Erwärmungsverhalten des Messwandlers während eines definierten Zeitintervalls ausgewertet.

Unter dem Erwärmungsverhalten des Messwandlers wird insbesondere die zeitliche Veränderung der durch die Temperaturmesseinheit erfassten Temperatur einer Temperaturmessstelle des Messwandlers oder die zeitliche Veränderung einer Temperaturdifferenz zwischen zwei bzw. mehreren Temperaturmessstellen (z.B. Temperaturdifferenz zwischen der Temperatur des Messwandlers und einer Referenztemperatur) verstanden. Durch diese zeitliche Änderung der Temperatur bzw. der Temperaturdifferenz zweier Temperaturmessstellen, also dem Erwärmungsverhalten, kann auf den zeitlichen Stromverlauf geschlossen werden. Anhand dieses zeitlichen Stromverlaufs kann wiederum auf einen Überlastzustand am Verbraucher geschlossen werden.

Die Auswerteeinheit versetzt die Vorrichtung bei einer ermittelten Überlast eines Verbrauchers von ihrem Normalzustand in den Überlastzustand. Innerhalb der Vorrichtung ist die erste Strombahn im Normalzustand elektrisch leitend. Ermittelt die Auswerteeinheit eine anstehende Überlast, so wird daraufhin der Stromfluss über die erste Strombahn verhindert. Im Überlastzustand ist die erste Strombahn somit innerhalb der Vorrichtung unterbrochen, so dass der Stromfluss über die erste Strombahn verhindert wird.

Ein mit der Vorrichtung erzielter Vorteil besteht insbesondere darin, dass mittels der Vorrichtung sowohl AC- als auch DC-Ströme erfasst werden können. Es kann somit eine anstehende Überlast bei AC- und DC-Verbrauchern ermittelt werden. Ferner kann ein gegenüber einem Bimetall-Messverfahren verbesserter Einstellbereich erzielt werden. Ein weiterer Vorteil besteht ferner darin, dass mittels des Messwandlers ein thermisches Gedächtnis realisiert werden kann, da bei einer anstehenden Überlast der Messwandler stark erhitzt wird, so dass anhand der Temperatur und somit Abkühlung des Messwandlers ein Abkühlverhalten des Verbrauchers nachvollzogen werden kann. Vorzugsweise wird durch eine Auswerteeinheit die Abkühlung des Messwandlers ausgewertet, so dass ein vorzeitiges Aktivieren des Verbrauchers verhindert werden kann. Eine kompakte Bauform kann ebenso erzielt werden.

Bei der Vorrichtung sind die Anforderungen an die erste und zweite Leitung der Strombahn unterschiedlich zu den Anforderungen an den Messwandler. Die erste und zweite Leitung soll insbesondere einen möglichst geringen elektrischen Widerstand aufweisen. Der Messwandler hingegen dient der Ermittlung einer anstehenden Überlast eines nachgeschalteten Verbrauchers. Dies erfolgt mittels des strombedingten Temperaturanstiegs am Messwandler. Der Messwandler weißt daher eine andere Materialzusammensetzung auf als die erste und zweite Leitung.

Die erste und zweite Leitung der Strombahn ist vorzugsweise aus einem hoch kupferhaltigen Material (z.B. E-Cu ETP200) ausgebildet. Bei einem hoch kupferhaltigen Material liegt der der Kupferanteil bei mindestens 90 %.

Der Messwandler ist vorzugsweise aus Stahl, CrAl-Stahl, CrNi, CuNi, FeNi, Cu oder Manganin. Vorzugsweise ist er zumindest zu 80 % aus einem dieser Materialien gebildet.

Aufgrund der unterschiedlichen Materialzusammensetzung des Messwandlers gegenüber den ersten und zweiten Leitungen entstehen Schwierigkeiten bei dem mechanischen Verbinden des Messwandlers mit der ersten und zweiten Leitung der Strombahn.

Sofern die Strombahn z.B. durch hoch kupferhaltiges E-Cu ETP200 gebildet ist und der Messwandler aus Stahl ist, sind bei der Verbindung des Messwandlers mit der ersten und zweiten Leitung insbesondere folgende Probleme gegeben:
- Bei einer direkten Schweißverbindung des Messwandlers mit den hoch kupferhaltigen Leitern kann es aufgrund der ChromStahl-Kupferverbindung vermehrt zu einer Rissbildung kommen.
- Eine direkte Lötverbindung des Messwandlers mit den Leitern ist nur mit Hilfe eines Flussmittels möglich. Ein derartiges Verfahren ist jedoch unwirtschaftlich und ebenso technisch schwer zu realisieren, da die Verbindung gereinigt werden muss. Ein flussmittelfreies Löten mit phosphorhaltigem Hartlot ist durch den Stahlanteil im Messwandler nicht möglich.
- Kupfer hat einen niedrigeren elektrischen Widerstand; Cu = 0,017 (Ohm mm²)/m. Der Messwandler hingegen weist einen elektrischen Widerstand auf, der vorzugsweise mindestens eine Leistung von 80 mW umsetzt, da anhand dessen Temperatur ein Rückschluss auf den vorliegenden Stromfluss gewonnen werden muss. Sollen die Leitungen direkt mit dem Messwandler verbunden werden, so muss das Kupfer der Leitungen aufgeheizt werden. Hierfür muss bei der Verbindungsstelle zwischen dem Messwandler und der Leitung eine derart hohe Energie eingebracht werden, welche zu einer Überhitzung des Werkstoffs des Messwandlers führen würde. Diese Überhitzung des Messwandlers kann zu einer Aufhärtung im Gefüge des Messwandlers führen sowie zu Spannungsrissen an der Oberfläche. Es kann sogar zu einer vollständigen Zerstörung des Messwandlers an der Verbindungsstelle führen.
Dadurch, dass bei der mechanischen und elektrischen Verbindungsstelle des Messwandlers mit der ersten und/oder zweiten Leitung
- der Messwandler eine Beschichtung aufweist,
- der Messwandler oder die erste und/oder zweite Leitung plattiert ist, oder
- ein separates Plättchen zwischen dem Messwandler und der ersten und/oder zweiten Leitung angeordnet ist, können obengenannte Probleme vermieden werden.

Die Beschichtung oder Plattierung des Messwandlers ist insbesondere lötbar. Die Plattierung der ersten und/oder zweiten Leitung ist insbesondere schweißbar. Liegt ein beschichteter oder plattierter Messwandler vor, so ist die erste und/oder zweite Leitung mit der zugehörigen beschichteten oder plattierten Verbindungsstelle des Messwandlers verlötet. Liegt eine plattierte erste und/oder zweite Leitung vor, so ist der Messwandler mit der ersten und/oder zweiten Leitung mit der zugehörigen plattierten Verbindungsstelle der ersten und/oder zweiten Leitung verschweißt.

Ist bei der Verbindungsstelle zwischen dem Messwandler mit der ersten und/oder zweiten Leitung ein Plättchen angeordnet, so ist die mechanische und elektrische Anbindung des Messwandlers an die erste und/oder zweite Leitung insbesondere durch Schweißung des Messwandlers an das Plättchen und durch Lötung der ersten und/oder zweiten Leitung an das Plättchen ausgebildet. Eine optimierte feste mechanische und elektrische Verbindung zwischen dem Messwandler und der ersten und/oder zweiten Leitung kann auf diese Weise sichergestellt werden. Insbesondere kann hierdurch abgestimmt auf das verwendete Material, dessen Dicke, Querschnitt und Form sichergestellt werden, dass an der Verbindungsstelle zwischen dem Messwandler und der ersten und/oder zweiten Leitung ein möglichst geringer Übergangswiderstand sowie eine geringe Temperaturentwicklung seitens der Verbindung an der Verbindungsstelle vorliegt. Ferner kann ein verbindliches Tragen eines Kurzschlussstromes sowie eines Überlast- bzw. Anlaufstromes sichergestellt werden. Ein günstiges Kosten-Niveau aufgrund beherrschbarer Fertigungsprozesse und kostengünstiger Werkstoffe ist ebenso gegeben.

Die Verbindungsstelle zwischen dem Messwandler und der ersten bzw. zweiten Leitung ist insbesondere der Bereich des Messwandlers und der ersten bzw. zweiten Leitung über welchen der mechanische und elektrische Kontakt untereinander hergestellt wird.

In einer vorteilhaften Ausführungsform der Erfindung ist der Messwandler aus Stahl und/oder die erste und zweite Leitung weist einen Kupferanteil von mindestens 50 % auf.

Der Messwandler weist vorzugsweise einen der folgenden Materialpaarungen auf: Chrom-Nickel Legierungen, Kupfer-Nickel Legierungen, Chrom-Aluminium Legierungen, Stahl-Nickel Legierungen. Bezüglich des Messwandlers sind ebenso andere Legierungen denkbar, welche optimierte Heizleiterqualitäten vereinbaren.

In einer weiteren vorteilhaften Ausführungsform der Erfindung wird durch eine partielle Verkupferung der Oberfläche des Messwandlers eine lötbare Oberfläche am Messwandler erzeugt. Die Verkupferung findet insbesondere im Bereich der Verbindungsstelle des Messwandlers statt. Das Verkupfern des Messwandlers kann beispielsweise wie folgt erfolgen:
- Das Ausgangsmaterial für den Messwandler wird partiell kupferplattiert oder galvanisch mit mind. 10 µm Kupfer beschichtet.
- Der Messwandler wird galvanisch mit mind. 10 µm Kupfer beschichtet.
- Der Messwandler wird, evtl. vor einem Biegen, durch sog. Kaltgasspritzen mit mind. 10 µm Kupfer beschichtet.

Der Messwandler wird vorzugsweise gestanzt und/oder gebogen.

In einer weiteren vorteilhaften Ausführungsform der Erfindung wird die erste und/oder zweite Leitung der Strombahn mit dem Material aus dem der Messwandler besteht (z.B. Stahl) plattiert. Die zum Messwandler gewandte zusätzlich plattierte Schicht der Leitung ist an der Verbindungsstelle vorzugsweise mindestens 10 µm.

In einer weiteren vorteilhaften Ausführungsform der Erfindung umfasst die Beschichtung des Messwandlers Kupfer, so dass der Messwandler eine verkupferte Oberfläche aufweist. Auf diese Weise kann die Leitung mittels einer Lötverbindung mit dem Messwandler mechanisch und elektrisch verbunden werden.

In einer weiteren vorteilhaften Ausführungsform der Erfindung ist die zusätzliche Schicht der Plattierung oder die zusätzliche Schicht der Beschichtung am Messwandler an der Verbindungsstelle mindestens 10 µm dick.

In einer weiteren vorteilhaften Ausführungsform der Erfindung weist das Plättchen eine schweißbare und eine lötbare Seitenfläche auf.

Das Plättchen hat die Eigenschaft, dass es sowohl mit dem Messwandler verschweißt als auch mit der ersten bzw. zweiten Leitung verlötet werden kann. Dabei kann das Plättchen entweder aus einem homogenen Werkstoff wie beispielsweise Messing oder Bronze bestehen oder aus einem mehrschichtigen Werkstoff wie z.B. kupferbeschichteter Stahl. Im Fall von kupferbeschichtetem Stahl wird das Plättchen mit der Stahlseite an den Messwandler geschweißt und mit seiner kupferbeschichteten Seite kann es an die entsprechende Leitung der Strombahn gelötet bzw. anderweitig verbunden werden.

In einer weiteren vorteilhaften Ausführungsform der Erfindung ist der Messwandler lediglich mittels des Plättchens, der Beschichtung oder der Plattierung mechanisch und elektrisch mit der ersten und/oder zweiten Leitung verbunden.

In einer weiteren vorteilhaften Ausführungsform der Erfindung umfasst die Überwachungseinrichtung ferner einen Träger, wobei die Temperaturmesseinheit auf dem Träger galvanisch getrennt von dem Messwandler angeordnet ist.

In einer weiteren vorteilhaften Ausführungsform der Erfindung betätigt bei einer ermittelten anstehenden Überlast die Auswerteeinheit ein Schaltschloss der Vorrichtung, so dass durch die Betätigung des Schaltschlosses ein Stromfluss über die erste Strombahn unterbunden wird.

Die Betätigung des Schaltschlosses kann z.B. elektronisch oder mittels eines mechanischen Auslösers erfolgen. Durch das Öffnen des Schaltschlosses wird der Stromfluss in der ersten Strombahn unterbrochen.

In einer weiteren vorteilhaften Ausführungsform der Erfindung umfasst die Vorrichtung ferner einen Kurzschlussauslöser, wobei bei einem Auslösen des Kurzschlussauslösers das Schaltschloss betätigt wird.

In einer weiteren vorteilhaften Ausführungsform der Erfindung kann die Auswerteeinheit anhand eines Vergleichs des ermittelten Erwärmungsverhaltens des Messwandlers mit einem in der Auswerteeinheit hinterlegten Referenzwert eine anstehende Überlast am Verbraucher ermitteln.

Die Temperaturmesseinheit ist dazu ausgebildet der Auswerteeinheit Temperaturen zu übermitteln, so dass die Auswerteeinheit ein Erwärmungsverhalten des Messwandlers ermitteln kann. Da in der Auswerteeinheit ein Referenzwert hinterlegt ist, kann durch einen Vergleich des ermittelten vorliegenden Erwärmungsverhaltens mit dem Referenzwert ein Rückschluss auf den vorliegenden Betriebszustand des Verbrauchers gewonnen werden (Auswertung). Steht eine Überlast an, so liegt im Vergleich zum Nennbetrieb ein erhöhter Stromfluss und somit eine erhöhte Temperatur vor. Die erhöhte Temperatur führt zu einem charakteristischen Erwärmungsverhalten des Messwandlers, welche durch einen Abgleich mit dem hinterlegten Referenzwert erkannt werden kann.

Durch den Referenzwert wird insbesondere das Erwärmungsverhalten des Messwandlers in Abhängigkeit des Stromflusses durch den Messwandler über die Zeit charakterisiert, so dass eine Überlast am Verbraucher erkannt werden kann. Durch einen Vergleich des ermittelten Erwärmungsverhaltens des Messwandlers mit dem Referenzwert kann somit zwischen einem durch den Nennbetrieb bedingten Erwärmungsverhalten (Normalzustand) und einem eine anstehende Überlast charakterisierendes Erwärmungsverhalten (Überlastzustand) des Messwandlers unterschieden werden. Im Nennbetrieb liegt der Normalzustand vor. Bei einer ermittelten anstehenden Überlast wird der Überlastzustand herbeigeführt.

In einer weiteren vorteilhaften Ausführungsform der Erfindung umfasst die Temperaturmesseinheit einen ersten Temperaturfühler zum Erfassen der Temperatur des Messwandlers. Der erste Temperaturfühler kann insbesondere eine Temperatur an einer ersten Messstelle des Messwandlers erfassen und der Auswerteeinheit bereitstellen. Der erste Temperaturfühler ist vorzugsweise auf der dem Messwandler abgewandten Seitenfläche des Trägers angeordnet.

In einer weiteren vorteilhaften Ausführungsform der Erfindung umfasst die Temperaturmesseinheit ferner einen zweiten Temperaturfühler, wobei der zweite Temperaturfühler eine Referenztemperatur erfassen kann, wobei die Auswerteeinheit eine anstehende Überlast am Verbraucher mittels erfassten Temperaturen des ersten und zweiten Temperaturfühlers ermitteln kann.

Die Referenztemperatur kann z.B. dezentral zum Messwandler innerhalb der Vorrichtung ermittelt werden; d.h. die Temperatur des Messwandlers wird nicht durch den zweiten Temperaturfühler erfasst. Die Auswerteeinheit kann somit das Erwärmungsverhalten des Messwandlers mittels erfasster Temperaturen des Messwandlers durch den ersten Temperaturfühler und erfasster Referenztemperaturen des zweiten Temperaturfühlers ermitteln und auswerten.

Es ist jedoch ebenso denkbar, dass als Referenztemperatur eine Temperatur an einer Temperaturmessstelle des Messwandlers erfasst wird, welche nicht durch den ersten Temperaturfühler erfasst wird. Ist die Referenztemperatur des zweiten Temperaturfühlers eine Temperatur des Messwandlers, so ist der zweite Temperaturfühler derart auf dem Träger angeordnet, dass er eine Temperatur einer Messstelle des Messwandlers erfassen kann.

Durch einen Abgleich einer erfassten Temperatur des Messwandlers mit einer vorzugsweise zeitgleich erfassten Referenztemperatur in der Auswerteinheit können externe Temperatureinflüsse als Fehlerursache weitestgehend ausgeschlossen werden. Durch die Auswerteeinheit kann somit ein ausschließlich strombedingtes, eine Überlast am Verbraucher charakterisierendes, Erwärmungsverhalten des Messwandlers ermittelt werden.

Die Erfassung der Temperatur am ersten und zweiten Temperaturfühler erfolgt vorzugsweise zeitgleich.

In einer weiteren vorteilhaften Ausführungsform der Erfindung umfasst die Temperaturmesseinheit einen dritten Temperaturfühler, wobei der erste und dritte Temperaturfühler der ersten Temperaturmesseinheit gleichzeitig jeweils eine Temperatur des Messwandlers erfassen kann, wobei die Auswerteeinheit anhand der erfassten Temperaturen der Temperaturmesseinheit eine anstehende Überlast am Verbraucher ermitteln kann.

In einer weiteren vorteilhaften Ausführungsform der Erfindung umfasst die Temperaturmesseinheit einen ersten, zweiten und dritten Temperaturfühler, wobei der erste, zweite und dritte Temperaturfühler derart zum Messwandler angeordnet ist, dass der erste Temperaturfühler eine Temperatur an einem ersten Messpunkt des Messwandlers, der zweite Temperaturfühler eine Temperatur an einem zweiten Messpunkt des Messwandlers und der dritte Temperaturfühler eine Temperatur an einem dritten Messpunkt des Messwandlers erfassen kann, wobei in Bezug zu einer ersten Seitenfläche des Messwandlers der zweite Messpunkt zwischen dem ersten und dritten Messpunkt liegt.

In Bezug zu einer ersten Seitenfläche des Trägers ist der zweite Temperaturfühler zwischen dem ersten und dritten Temperaturfühler angeordnet. Vorzugsweise ist die erste Seitenfläche des Messwandlers parallel zur ersten Seitenfläche des Trägers angeordnet.

In einer weiteren vorteilhaften Ausführungsform der Erfindung ist mindestens ein Temperaturfühler der Temperaturmesseinheit maximal 2 mm von dem Messwandler beabstandet.

In einer weiteren vorteilhaften Ausführungsform der Erfindung ist der Messwandler ein Widerstand mit einer charakteristischen Erwärmungskurve. Vorzugsweise weist der Messwandler eine konstante Verlustleistung auf. Der Messwandler ist vorzugsweise ein Shunt.

Der Auswerteeinheit liegt vorzugsweise ein Teil der Erwärmungskurve des Messwandlers als Referenzwert vor, so dass sie durch einen Abgleich des ermittelten Erwärmungsverhaltens mit dem Referenzwert eine anstehende Überlast erkennen kann. Bei dem Abgleich mit dem Referenzwert wird vorzugsweise das Erwärmungsverhalten des Messwandlers während eines definierten Zeitintervalls betrachtet. Es werden somit die ermittelten Temperaturen des Messwandlers durch die Temperaturmesseinheit während eines definierten Zeitintervall analysiert.

In einer weiteren vorteilhaften Ausführungsform der Erfindung ist die Überwachungseinrichtung derart ausgebildet, dass zur Ermittlung des Erwärmungsverhaltens des Messwandlers die Temperatur des Messwandlers wiederholt in einem fest definierten Zeitintervall erfasst und ausgewertet wird.

In einer weiteren vorteilhaften Ausführungsform der Erfindung umfasst die Vorrichtung ferner eine zweite Strombahn, welche analog zur ersten Strombahn ausgebildet ist.

Die Überwachungseinrichtung der Vorrichtung umfasst insbesondere ferner eine zweite Temperaturmesseinheit, welche auf dem Träger galvanisch getrennt von dem weiteren Messwandler der zweiten Strombahn angeordnet ist und eine Temperatur des zweiten Messwandlers erfassen kann. Die Auswerteeinheit kann somit mittels der erfassten Temperaturen der zweiten Temperaturmesseinheit ein zeitliches Erwärmungsverhalten des weiteren Messwandlers ermitteln und durch eine Auswertung des ermittelten zeitlichen Erwärmungsverhaltens des weiteren Messwandlers eine anstehende Überlast am Verbraucher ermitteln. Der Träger umfasst somit mindestens einen Temperaturfühler je Temperaturmesseinheit.

Die zweite Strombahn wird vorzugsweise analog zur ersten Strombahn überwacht, wobei gleiche Komponenten der Vorrichtung, sofern möglich, für beide Strombahnen genutzt werden. Es kann z.B. die Auswerteeinheit und/oder der Träger gemeinsam genutzt werden.

Die Verbindung der ersten und zweiten Leitung der zweiten Strombahn mit dem weiteren Messwandler erfolgt analog zur Verbindung des Messwandlers der ersten Strombahn mit dessen Leitungen.

Liegt ein dreiphasiges System vor, so umfasst die Vorrichtung vorzugsweise eine dritte Strombahn, welche analog zur ersten Strombahn aufgebaut und überwacht wird.

In einer weiteren vorteilhaften Ausführungsform der Erfindung sind die Auswerteeinheit und/oder die Temperaturfühler der Temperaturmesseinheit/-en auf dem Träger montiert.

In einer weiteren vorteilhaften Ausführungsform der Erfindung ist der jeweilige Temperaturfühler derart ausgebildet, dass er in Abhängigkeit von der vorliegenden Temperatur einen charakteristischen elektrischen Zustand einnimmt. Der Temperaturfühler ist insbesondere ein Thermoelement (z.B. Thermodraht), ein temperaturabhängiger Halbleiter (z.B. Diode, Kaltleiter) oder ein Widerstandsthermometer (z.B. PT100, PT1000).

Wird beispielsweise eine Diode als Temperaturfühler verwendet, so kann anhand einer Messung der Spannung an der Diode ein Rückschluss auf die vorliegende Temperatur gewonnen werden. Eine Temperaturänderung des Messwandlers würde folglich zu einer Temperaturänderung an der Diode führen, welche zu einer Spannungsänderung führt.

In einer weiteren vorteilhaften Ausführungsform der Erfindung ist die Vorrichtung dezentral zum Verbraucher angeordnet, d.h. sie ist kein Bestandteil des Verbrauchers.

In einer weiteren vorteilhaften Ausführungsform der Erfindung umfasst der Messwandler das Material Kohlenstoff, insbesondere Graphit.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Vorrichtung zum Schutz eines elektrischen Verbrauchers,
- FIG 2: eine schematische Darstellung einer mechanischen und elektrischen Verbindungsstelle eines Messwandlers einer Vorrichtung gemäß FIG 1 mit der ersten Leitung der ersten Strombahn,
- FIG 3: eine schematische Darstellung einer alternativen mechanischen und elektrischen Verbindungsstelle eines Messwandlers einer Vorrichtung gemäß FIG 1 mit der ersten Leitung der ersten Strombahn, und
- FIG 4: eine schematische Darstellung einer weiteren alternativen mechanischen und elektrischen Verbindungsstelle eines Messwandlers einer Vorrichtung gemäß FIG 1 mit der ersten Leitung der ersten Strombahn.

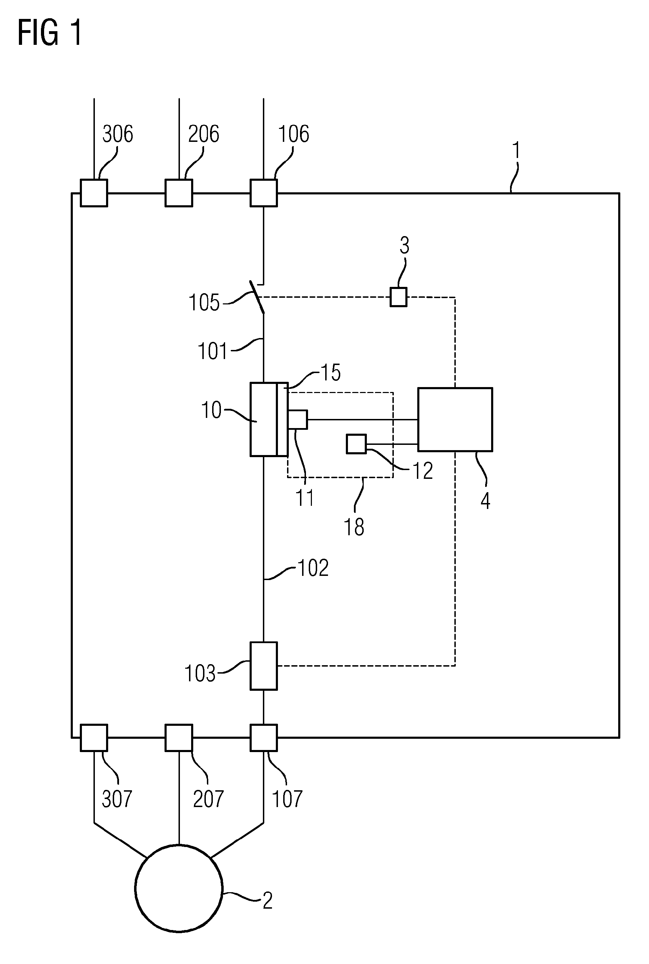

FIG 1 zeigt eine schematische Darstellung einer Vorrichtung 1 zum Schutz eines elektrischen Verbrauchers 2. Die Vorrichtung 1 ist in diesem Ausführungsbeispiel ein Leistungsschalter 1, mit welchem ein Verbraucher 2, nämlich ein dreiphasiger elektrischer Motor 2, überwacht werden kann. Der Leistungsschalter 1 ist hierfür in den Versorgungsstrang des Verbrauchers 2 zwischengeschaltet, so dass mittels des Leistungsschalters 1 die drei Phasen des Verbrauchers 2 überwacht werden können.

Damit der Leistungsschalter 1 in den Versorgungsstrang des elektrischen Verbrauchers 2 integriert werden kann, weist er eingangsseitige Anschlussvorrichtungen 106, 206, 306 und ausgangsseitige Anschlussvorrichtungen 107, 207, 307 auf. In dem Leistungsschalter 1 werden die einzelnen Phasen des Verbrauchers 2 galvanisch getrennt geführt. Die erste Phase des Verbrauchers wird über die erste Strombahn, welche zwischen der ersten eingangsseitigen Anschlussvorrichtung 106 und der ersten ausgangsseitigen Anschlussvorrichtung 107 liegt, geführt und überwacht. Die zweite Phase des Verbrauchers wird über die zweite Strombahn, welche zwischen der zweiten eingangsseitigen Anschlussvorrichtung 206 und der zweiten ausgangsseitigen Anschlussvorrichtung 207 liegt, geführt und überwacht. Die dritte Phase des Verbrauchers wird über die dritte Strombahn, welche zwischen der dritten eingangsseitigen Anschlussvorrichtung 306 und der dritten ausgangsseitigen Anschlussvorrichtung 307 liegt, geführt und überwacht. Aus Gründen der Übersicht, wird in der FIG 1 lediglich die erste Strombahn der Vorrichtung 1 mit ihrer Überwachungseinrichtung dargestellt und genauer beschrieben.

Die erste Strombahn umfasst eine erste Leitung 101, eine zweite Leitung 102, ein Schaltelement 105, einen Messwandler 10 und einen Kurzschlussauslöser 103. Zur Überwachung der ersten Strombahn umfasst die Vorrichtung eine Auswerteeinheit 4, ein Schaltschloss 3, einen Träger 15 und eine Temperaturmesseinheit 18 mit einem ersten und einen zweiten Temperaturfühler 11, 12.

Über das Schaltelement 105 der ersten Strombahn kann für die erste Phase der Energiefluss zum Verbraucher 2 unterbrochen werden. Die Ansteuerung des Schaltelements 105 erfolgt über das Schaltschloss 3 der Vorrichtung. Das Schaltschloss 3 ist mit der Auswerteeinheit 4 und hierüber mit dem Kurzschlussauslöser 103 der ersten Strombahn verbunden.

Mittels des Kurzschlussauslösers 103 der ersten Strombahn kann ein auftretender Kurzschluss in der ersten Strombahn und somit in einer Phase des Verbrauchers 2 detektiert werden, so dass bei einer Detektion eines Kurzschlusses die Energiezufuhr zum Verbraucher 2 unterbunden werden kann. Hierfür wird von dem Kurzschlussauslöser 103 ein entsprechendes Signal an das Schaltschloss 3 ausgegeben, so dass dieses das Schaltelement 105 der ersten Strombahn öffnet.

Mittels der Überwachungsvorrichtung kann der Leistungsschalter 1 eine anstehende Überlast des elektrischen Verbrauchers 2 detektieren. Hierfür ist zwischen der ersten und zweiten Leitung 101, 102 der ersten Strombahn der Messwandler 10 angeordnet. In Abhängigkeit der vorliegenden Stromhöhe und Stromflusszeit in der ersten Strombahn liegt eine charakteristische Erwärmung des Messwandlers 10 vor.

Die Temperatur des Messwandlers 10 kann mittels des ersten Temperaturfühlers 11 (z.B. Diode) der Temperaturmesseinheit erfasst werden. Die erfasste Temperatur am ersten Temperaturfühler 11 der Temperaturmesseinheit wird der Auswerteeinheit 4 bereitgestellt. Der erste Temperaturfühler 11 der ersten Temperaturmesseinheit ist galvanisch von dem Messwandler 10 getrennt und auf der dem Messwandler 10 abgewandten Seitenfläche des Trägers 15 befestigt. Der Träger 15 ist unmittelbar zum Messwandler 10 angeordnet, so dass der erste Temperaturfühler 11 die Temperatur des Messwandlers 10 ermitteln kann.

Mittels des zweiten Temperaturfühlers 12 (z.B. Diode) der Temperaturmesseinheit wird eine Referenztemperatur innerhalb des Leistungsschalters 1 gemessen und der Auswerteeinheit 4 bereitgestellt. Der erste Temperaturfühler 11 erfasst die Temperatur an einem anderen Messpunkt als der zweite Temperaturfühler 12, so dass im aktiven Betrieb des Verbrauchers 2 eine strombedingte Erwärmung des Messwandlers 10 durch zeitgleiche Erfassungen der Temperaturen des ersten und zweiten Temperaturfühlers 11,12 ermittelt werden kann. Durch eine Auswertung der erfassten Temperaturen des ersten und zweiten Temperaturfühlers 11,12 kann die Auswerteeinheit 4 ein Erwärmungsverhalten am Messwandler 10 ermitteln und auswerten. Durch den zusätzlichen Abgleich der Temperatur des ersten Temperaturfühlers 11 mit der Referenztemperatur des zweiten Temperaturfühlers 12 kann die Analyse der ermittelten Temperatur des Messwandlers 10 auf die strombedingte Erwärmung des Messwandlers 10 reduziert werden. Mittels der ermittelten strombedingten Erwärmung des Messwandlers 10 kann folglich ein Rückschluss auf den vorliegenden Stromfluss in der ersten Strombahn und somit ein Rückschluss auf den vorliegenden Betriebszustand des Verbrauchers 2 gewonnen werden, da bei einer anstehenden Überlast ein erhöhter Stromfluss in den einzelnen Phasen des Verbrauchers 2 vorliegt.

Der Auswerteeinheit 4 (z.B. ein Mikrocontroller) ist die Erwärmungscharakteristik des Messwandlers 10 bekannt und als Referenzwert hinterlegt. Die Auswerteeinheit 4 kann folglich durch einen Vergleich des strombedingten Erwärmungsverhaltens des Messwandlers 10, insbesondere während eines definierten Zeitintervalls, mit dem Referenzwert eine anstehende Überlast des elektrischen Verbrauchers 2 ermitteln und entsprechende Gegenmaßnahmen einleiten. Das Zeitintervall in welchem die Analyse des Erwärmungsverhaltens des Messwandlers 10 erfolgt, wird vorzugsweise in Abhängigkeit von der vorliegenden Temperatur des Messwandlers 10 gewählt. Bei einer ermittelten anstehenden Überlast des Verbrauchers 2 gibt die Auswerteeinheit 4 ein Warnsignal an das Schaltschloss 3 aus, so dass das Schaltelement 105 geöffnet und somit der Energiefluss zum Verbraucher 2 unterbunden wird. Auf diese Weise kann eine thermische Beschädigung des Verbrauchers 2 durch eine Überlast vermieden werden.

Dadurch, dass eine thermische Überlast des Verbrauchers 2 durch eine Auswertung des Erwärmungsverhaltens des Messwandlers 10 ermittelt wird, liegt ebenso ein thermisches Gedächtnis durch den Messwandler 10 vor. Erst nachdem der Messwandler 10 eine definierte Abkühlung erfahren hat, kann das Schaltelement 105 geschlossen werden, so dass der Verbraucher 2 erneut an das Versorgungsnetz geschaltet und wieder mit Strom versorgt wird. Die Ermittlung der notwendigen Abkühlung des Verbrauchers 2 erfolgt durch eine Analyse der Temperatur des Messwandlers 10 mittels des Temperaturfühlers 11 und der Auswerteeinheit 4. Hierfür liegt der Auswerteeinheit 4 ebenso ein Referenzwert vor.

Die Vorrichtung 1 zur Überwachung einer thermischen Überlast eines Verbrauchers 2 wurde in FIG 1 beispielhaft anhand eines Leistungsschalters 1 beschrieben. Ebenso kann die Vorrichtung 1 z.B. ein Überlastrelais sein. In diesem Fall wären der Kurzschlussauslöser 103 sowie gegebenenfalls das Schaltschloss 3 und dessen anzusteuerndes Schaltelement 105 nicht vorhanden.

Die Temperaturfühler 11,12 sind jeweils Halbleiter, insbesondere Dioden, so dass mittels einer Analyse deren Spannung die Temperatur am Temperaturfühler 11,12 ermittelt werden kann. Zur Steigerung der Messgenauigkeit können ebenso mehrere Temperaturfühler an dem Messwandler 10 platziert werden. Ebenso ist es denkbar, dass der zweite Temperaturfühler 12 außerhalb der Vorrichtung 1 platziert ist.

Als Verbraucher 2 kann ebenso eine Leitung gesehen werden, bei welcher ein Schutz vor einer thermischen Überlast sichergestellt werden muss.

Ein großer Vorteil der Vorrichtung 1 und insbesondere der Überwachungseinrichtung besteht darin, dass eine sichere galvanische Trennung zwischen den einzelnen Phasen (Strombahnen) sowie zwischen den Temperaturfühlern 11,12 zu den Strombahnen ermöglicht wird.

Der Messwandler 10 weist üblicherweise bei Nennbetrieb des Verbrauchers 2 eine Temperatur von ca. 60-100°C auf. In diesem Temperaturbereich befindet sich die Vorrichtung 1 im Normalzustand. Bei einem Kurzschluss in einer Strombahn können hingegen für einige Millisekunden maximal Temperaturen von bis zu 500°C am Messwandler 10 entstehen. Diese Höchsttemperatur kühlt sich, in den ersten 10 Millisekunden bis 20 Millisekunden, rasch ab. Danach klingt die Temperatur bei einem Level von ca. 200-250°C langsam für einige Minuten ab. Bei einem Überlastfall können für einige Sekunden Temperaturen von bis zu 300°C am Messwandler 10 vorliegen. Auch diese Temperaturen klingen für einige Minuten langsam ab.

Sobald die Vorrichtung 1 eine anstehende thermische Überlast oder einen Kurzschluss ermittelt, wird das Schaltschloss 3 der Vorrichtung 1 angesteuert. Das Schaltschloss 3 öffnet das Schaltelement 105 der Strombahn, so dass der Stromfluss über die Strombahn zum Verbraucher 2 unterbunden ist.

Da es sich bei dem dargestellten Verbraucher 2 um einen dreiphasigen Verbraucher 2 handelt, wird bei einer ermittelten anstehenden thermischen Überlast oder einem Kurzschluss durch das Schaltschloss 3 jeweils das Schaltelement 105 der drei Strombahnen angesteuert, so dass der Stromfluss auf den drei Strombahnen unterbunden ist. Der Aufbau der zweiten und dritten Strombahn der Vorrichtung ist analog zur ersten Strombahn aufgebaut, wobei der Träger 15, die Auswerteeinheit 4, das Schaltschloss 3 sowie der zweite Temperaturfühler 12 innerhalb der Vorrichtung 1 gemeinsam genutzt werden. Es ist jedoch ebenso denkbar, dass diese Komponenten bzw. Teile davon separat für die jeweilige Strombahn ausgebildet sind.

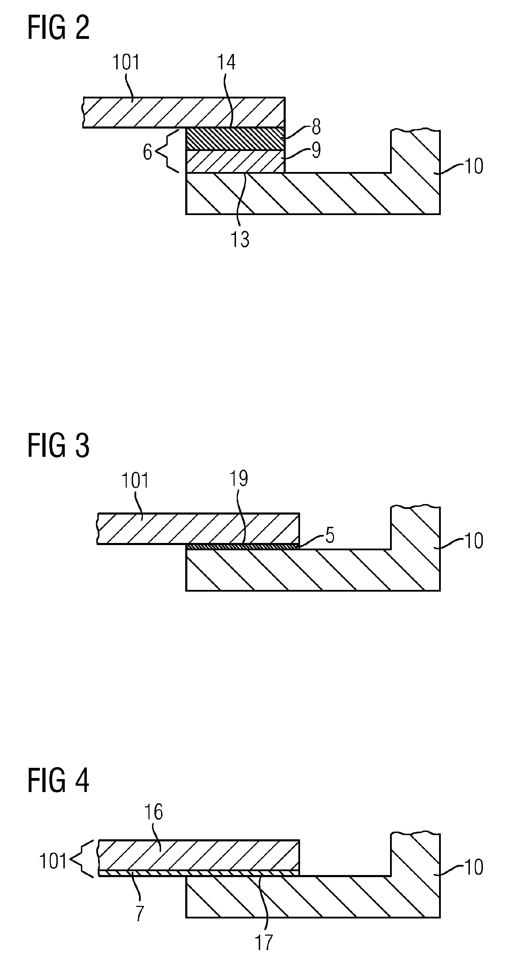

FIG 2 zeigt eine schematische Darstellung einer mechanischen und elektrischen Verbindungsstelle eines Messwandlers 10 einer Vorrichtung gemäß FIG 1 mit der ersten Leitung 101 der ersten Strombahn. Die erste und zweite Leitung 101 der ersten Strombahn ist aus einem hoch kupferhaltigen Material gebildet, nämlich aus E-Cu ETP200. Der Messwandler 10 ist aus Stahl.

An der mechanischen und elektrischen Verbindungsstelle des Messwandlers 10 mit der ersten Leitung 101 ist ein separates Plättchen 6 zwischen dem Messwandler 10 und der ersten Leitung 101 angeordnet. Das Plättchen 6 ist aus einem mehrschichtigen Werkstoff gebildet, nämlich aus kupferbeschichtetem Stahl. Das Plättchen 6 weist somit zwei Schichten 8,9 auf, nämlich eine Kupferschicht 8 und eine Stahlschicht 9. Die zum Messwandler 10 gerichtete Seitenfläche 13 des Plättchens 6 besteht aus Stahl (Stahlschicht 9) und die zur ersten Leitung 101 gerichtete Seitenfläche 14 des Plättchens 6 aus Kupfer (Kupferschicht 9). Zur Verbindung des Messwandlers 10 mit der ersten Leitung 101 wird das Plättchen 6 mit seiner Stahlschicht 9 an den Messwandler 10 geschweißt. Ferner wird das Plättchen 6 mit seiner Kupferschicht 9 an die erste Leitung 101 gelötet. Die mechanische und elektrische Verbindungsstelle des Messwandlers 10 mit der ersten und/oder zweiten Leitung 101 umfasst somit das Plättchen 6.

Auf diese Weise kann eine äußerst stabile mechanische Verbindung zwischen der ersten Leitung 101 und dem Messwandler 10 hergestellt werden. Ferner werden die geforderten elektrischen Anforderungen, insbesondere möglichst geringer elektrischer Übertragungswiderstand (≤ 200 µΩ) mittels einer derartigen Verbindungsstelle zwischen dem Messwandler 10 und der ersten Leitung 101 erfüllt. Die Verbindung der zweiten Leitung mit dem Messwandler erfolgt analog zur Verbindung der ersten Leitung mit dem Messwandler.

FIG 3 zeigt eine schematische Darstellung einer alternativen mechanischen und elektrischen Verbindungsstelle eines Messwandlers 10 einer Vorrichtung gemäß FIG 1 mit der ersten Leitung 101 der ersten Strombahn. Im Unterschied zur FIG 2 erfolgt die Verbindung des Messwandlers 10 mit der ersten Leitung 101 nicht mittels eines Plättchens. In FIG 3 ist der Messwandler 10 an dem zur mechanischen und elektrischen Verbindung mit der ersten Leitung 101 vorgesehenen Bereich verkupfert. Der Messwandler 10 weist im Bereich der Kontaktstelle zur ersten Leitung 101 eine ca. 15 µm dicke Beschichtung 5 aus Kupfer auf.

Zur Verbindung des Messwandlers 10 mit der ersten Leitung wird die erste Leitung 101 partiell an die zur ersten Leitung 101 ausgerichteten Fläche 19 der Kupferbeschichtung 5 des Messwandlers 10 gelötet, so dass eine stabile mechanische und elektrische Verbindung hergestellt wird. Durch eine derartige Verbindung werden die geforderten elektrischen Anforderungen zwischen dem Messwandler 10 und der ersten Leitung 101 erfüllt. Die Verbindung der zweiten Leitung mit dem Messwandler 10 erfolgt analog zur Verbindung der ersten Leitung 101 mit dem Messwandler 10.

FIG 4 zeigt eine schematische Darstellung einer weiteren alternativen mechanischen und elektrischen Verbindungsstelle eines Messwandlers 10 einer Vorrichtung gemäß FIG 1 mit der ersten Leitung 101 der ersten Strombahn. Im Unterschied zur FIG 2 erfolgt die Verbindung des Messwandlers 10 mit der ersten Leitung 101 nicht mittels eines Plättchens. In FIG 4 ist die erste Leitung 101 plattiert. Mit Plattieren bezeichnet man Verfahren aus der Metallverarbeitung, bei der ein unedleres Material (Metall) mechanisch (nicht galvanisch) durch ein anderes edleres Material überdeckt wird. Die erste Strombahn 101 weist zumindest partiell an ihrer zum Messwandler 10 gerichteten Seitenfläche eine ca. 15 µm dicke plattierte Stahlschicht 7 auf. Die erste Leitung umfasst somit eine erste Schicht 16 aus hoch kupferhaltigem Material (E-Cu ETP200) und die plattierte Schicht 7 aus Stahl.

Zur Verbindung des Messwandlers 10 mit der ersten Leitung 101 wird der Messwandler 10 partiell mit der aus Stahl bestehenden Seitenfläche 17 der ersten Leitung 101 verschweißt, so dass eine stabile mechanische und elektrische Verbindung hergestellt wird. Durch eine derartige Verbindung werden die geforderten elektrischen Anforderungen zwischen dem Messwandler 10 und der ersten Leitung 101 erfüllt. Die Verbindung der zweiten Leitung mit dem Messwandler 10 erfolgt analog zur Verbindung der ersten Leitung 101 mit dem Messwandler 10.

## Patentansprüche

1. Vorrichtung (1) zum Schutz eines elektrischen Verbrauchers (2) vor einer Überlast, wobei die Vorrichtung (1) eine erste Strombahn, welche eine erste und zweite Leitung (101,102) umfasst, und eine Überwachungseinrichtung, zur Ermittlung der anstehenden Überlast des elektrischen Verbrauchers (2), umfasst,
**dadurch gekennzeichnet, dass**
die Überwachungseinrichtung eine Temperaturmesseinheit (18), eine Auswerteeinheit (4) und einen Messwandler (10), welcher die erste Leitung (101) mit der zweiten Leitung (102) elektrisch leitend verbindet, umfasst, wobei die Temperaturmesseinheit (18) eine Temperatur des Messwandlers (10) erfassen kann, wobei die Auswerteeinheit (4) mittels erfassten Temperaturen der Temperaturmesseinheit (18) ein zeitliches Erwärmungsverhalten des Messwandlers (10) ermitteln kann und durch eine Auswertung des ermittelten zeitlichen Erwärmungsverhaltens des Messwandlers (10) eine anstehende Überlast am Verbraucher (2) ermitteln kann, wobei an der mechanischen und elektrischen Verbindungsstelle des Messwandlers (10) mit der ersten und/oder zweiten Leitung (101,102)
- der Messwandler (10) eine Beschichtung (5) aufweist,
- der Messwandler (10) oder die erste und/oder zweite Leitung (101,102) plattiert ist, oder
- jeweils ein Plättchen (6) zwischen dem Messwandler (10) und der ersten und/oder zweiten Leitung (101,102) angeordnet ist.

2. Vorrichtung (1) nach Anspruch 1, wobei der Messwandler (10) aus Stahl ist und/oder die erste und zweite Leitung einen Kupferanteil von mindestens 50 % aufweist.

3. Vorrichtung (1) nach einem der vorhergehenden Ansprüche, wobei die Beschichtung (5) des Messwandlers (10) Kupfer umfasst.

4. Vorrichtung (1) nach einem der vorhergehenden Ansprüche, wobei die Schicht der Beschichtung (5) oder die zusätzliche Schicht der Plattierung des Messwandlers an der Verbindungsstelle mindestens 10 µm dick ist.

5. Vorrichtung (1) nach Anspruch 1, wobei das Plättchen (6) eine schweißbare und eine lötbare Seitenfläche aufweist.

6. Vorrichtung (1) nach Anspruch 1 oder 5, wobei das Plättchen (6) aus Messing, Bronze oder kupferbeschichtetem Stahl ausgebildet ist.

7. Vorrichtung (1) nach einem der vorhergehenden Ansprüche, wobei die gesamte Kontaktfläche zwischen dem Messwandler (10) und der ersten und/oder zweiten Leitung (101,102) von dem Plättchen (6), der Beschichtung (5) oder der Plattierung (7) bedeckt ist.

8. Vorrichtung (1) nach einem der vorhergehenden Ansprüche, wobei die Überwachungseinrichtung ferner einen Träger (15) umfasst, wobei die Temperaturmesseinheit (18) auf dem Träger (15) galvanisch getrennt von dem Messwandler (10) angeordnet ist.

9. Vorrichtung (1) nach einem der vorhergehenden Ansprüche, wobei bei einer ermittelten anstehenden Überlast die Auswerteinheit (4) ein Schaltschloss (3) der Vorrichtung (1) betätigt, so dass durch die Betätigung des Schaltschlosses (3) ein Stromfluss über die erste Strombahn unterbunden wird.

10. Vorrichtung (1) nach einem der vorhergehenden Ansprüche, wobei die Auswerteeinheit (4) anhand eines Vergleichs des ermittelten Erwärmungsverhaltens des Messwandlers (10) mit einem in der Auswerteeinheit (4) hinterlegten Referenzwert eine anstehende Überlast am Verbraucher (2) ermitteln kann.

11. Vorrichtung (1) nach einem der vorhergehenden Ansprüche, wobei die Temperaturmesseinheit (18) einen ersten Temperaturfühler (11) zum Erfassen der Temperatur des Messwandlers (10) umfasst.

12. Vorrichtung (1) nach Anspruch 11, wobei die Temperaturmesseinheit (18) ferner einen zweiten Temperaturfühler (12) umfasst, wobei der zweite Temperaturfühler (12) eine Referenztemperatur erfassen kann, wobei die Auswerteeinheit (4) eine anstehende Überlast am Verbraucher (2) mittels erfassten Temperaturen des ersten und zweiten Temperaturfühlers (11,12) ermitteln kann.

13. Vorrichtung (1) nach Anspruch 11 oder 12, wobei die Temperaturmesseinheit (18) einen dritten Temperaturfühler umfasst, wobei der erste und dritte Temperaturfühler (11) der ersten Temperaturmesseinheit (18) jeweils eine Temperatur des Messwandlers (10) erfassen kann, wobei die Auswerteeinheit (4) anhand der erfassten Temperaturen der Temperaturmesseinheit (18) eine anstehende Überlast am Verbraucher (2) ermitteln kann.

14. Vorrichtung (1) nach einem der vorhergehenden Ansprüche, wobei die Temperaturmesseinheit (18) einen ersten, zweiten und dritten Temperaturfühler (11,12,13) umfasst, wobei der erste, zweite und dritte Temperaturfühler (11,12,13) derart zum Messwandler (10) angeordnet ist, dass der erste Temperaturfühler (11) eine Temperatur an einem ersten Messpunkt des Messwandlers (10), der zweite Temperaturfühler (12) eine Temperatur an einem zweiten Messpunkt des Messwandlers (10) und der dritte Temperaturfühler (13) eine Temperatur an einem dritten Messpunkt des Messwandlers (10) erfassen kann, wobei in Bezug zu einer ersten Seitenfläche des Messwandlers (10) der zweite Messpunkt zwischen dem ersten und dritten Messpunkt liegt.

15. Herstellverfahren einer Komponente einer Vorrichtung (1) nach einem der Ansprüche 1 bis 14, wobei
- der Messwandler (10) an der Verbindungsstelle zur ersten und/oder zweiten Leitung (101,102) beschichtet oder plattiert wird und die erste und/oder zweite Leitung (101,102) an die beschichtete oder plattierte Verbindungsstelle des Messwandlers (10) gelötet wird,
- die erste und/oder zweite Leitung an der Verbindungsstelle zum Messwandler (10) plattiert wird und der Messwandler (10) an die plattierte Verbindungsstelle der ersten und/oder zweiten Leitung (101,102) geschweißt wird, oder
- ein erstes Plättchen zwischen dem Messwandler (10) und der ersten Leitung (101) angeordnet wird und der Messwandler (10) an eine Stelle des ersten Plättchen geschweißt wird und die erste Leitung (101) an eine andere Stelle des ersten Plättchen gelötet wird und/oder ein zweites Plättchen zwischen dem Messwandler (10) und der zweiten Leitung (102) angeordnet wird und der Messwandler (10) an eine Stelle des zweien Plättchen geschweißt wird und die zweite Leitung (102) an eine anderen Stelle des zweiten Plättchen gelötet wird,
so dass eine mechanische und elektrisch leitende Verbindung zwischen dem Messwandler und der ersten und/oder zweiten Leitung hergestellt wird.

## Geänderte Patentansprüche

### Geänderte Patentansprüche gemäss Regel 137(2) EPÜ.

**1.** Vorrichtung (1) zum Schutz eines elektrischen Verbrauchers (2) vor einer Überlast, wobei die Vorrichtung (1) eine erste Strombahn, welche eine erste und zweite Leitung (101,102) umfasst, und eine Überwachungseinrichtung, zur Ermittlung der anstehenden Überlast des elektrischen Verbrauchers (2), umfasst,
**dadurch gekennzeichnet, dass**
die Überwachungseinrichtung eine Temperaturmesseinheit (18), eine Auswerteeinheit (4) und einen Messwandler (10), welcher die erste Leitung (101) mit der zweiten Leitung (102) elektrisch leitend verbindet, umfasst, wobei die Temperaturmesseinheit (18) eine Temperatur des Messwandlers (10) erfassen kann, wobei die Auswerteeinheit (4) mittels erfassten Temperaturen der Temperaturmesseinheit (18) ein zeitliches Erwärmungsverhalten des Messwandlers (10) ermitteln kann und durch eine Auswertung des ermittelten zeitlichen Erwärmungsverhaltens des Messwandlers (10) eine anstehende Überlast am Verbraucher (2) ermitteln kann, wobei der Messwandler (10) aus Stahl ist, wobei an der mechanischen und elektrischen Verbindungsstelle des Messwandlers (10) mit der ersten und/oder zweiten Leitung (101,102), welche einen Kupferanteil von mindestens 50 % aufweist,
- der Messwandler (10) eine Beschichtung (5) aufweist, welche Kupfer umfasst,
- der Messwandler (10) oder die erste und/oder zweite Leitung (101,102) plattiert ist, oder
- jeweils ein Plättchen (6) zwischen dem Messwandler (10) und der ersten und/oder zweiten Leitung (101,102) angeordnet ist, wobei das Plättchen (6) aus Messing, Bronze oder kupferbeschichtetem Stahl ausgebildet ist und eine schweißbare und eine lötbare Seitenfläche aufweist.

**2.** Vorrichtung (1) nach Anspruch 1, wobei die Schicht der Beschichtung (5) oder die zusätzliche Schicht der Plattierung des Messwandlers an der Verbindungsstelle mindestens 10 *µ*m dick ist.

**3.** Vorrichtung (1) nach einem der vorhergehenden Ansprüche, wobei die gesamte Kontaktfläche zwischen dem Messwandler (10) und der ersten und/oder zweiten Leitung (101,102) von dem Plättchen (6), der Beschichtung (5) oder der Plattierung (7) bedeckt ist.

**4.** Vorrichtung (1) nach einem der vorhergehenden Ansprüche, wobei die Überwachungseinrichtung ferner einen Träger (15) umfasst, wobei die Temperaturmesseinheit (18) auf dem Träger (15) galvanisch getrennt von dem Messwandler (10) angeordnet ist.

**5.** Vorrichtung (1) nach einem der vorhergehenden Ansprüche, wobei bei einer ermittelten anstehenden Überlast die Auswerteinheit (4) ein Schaltschloss (3) der Vorrichtung (1) betätigt, so dass durch die Betätigung des Schaltschlosses (3) ein Stromfluss über die erste Strombahn unterbunden wird.

**6.** Vorrichtung (1) nach einem der vorhergehenden Ansprüche, wobei die Auswerteeinheit (4) anhand eines Vergleichs des ermittelten Erwärmungsverhaltens des Messwandlers (10) mit einem in der Auswerteeinheit (4) hinterlegten Referenzwert eine anstehende Überlast am Verbraucher (2) ermitteln kann.

**7.** Vorrichtung (1) nach einem der vorhergehenden Ansprüche, wobei die Temperaturmesseinheit (18) einen ersten Temperaturfühler (11) zum Erfassen der Temperatur des Messwandlers (10) umfasst.

**8.** Vorrichtung (1) nach Anspruch 7, wobei die Temperaturmesseinheit (18) ferner einen zweiten Temperaturfühler (12) umfasst, wobei der zweite Temperaturfühler (12) eine Referenztemperatur erfassen kann, wobei die Auswerteeinheit (4) eine anstehende Überlast am Verbraucher (2) mittels erfassten Temperaturen des ersten und zweiten Temperaturfühlers (11,12) ermitteln kann.

**9.** Vorrichtung (1) nach Anspruch 7 oder 8, wobei die Temperaturmesseinheit (18) einen dritten Temperaturfühler umfasst, wobei der erste und dritte Temperaturfühler (11) der ersten Temperaturmesseinheit (18) jeweils eine Temperatur des Messwandlers (10) erfassen kann, wobei die Auswerteeinheit (4) anhand der erfassten Temperaturen der Temperaturmesseinheit (18) eine anstehende Überlast am Verbraucher (2) ermitteln kann.

**10.** Vorrichtung (1) nach einem der vorhergehenden Ansprüche, wobei die Temperaturmesseinheit (18) einen ersten, zweiten und dritten Temperaturfühler (11,12,13) umfasst, wobei der erste, zweite und dritte Temperaturfühler (11,12,13) derart zum Messwandler (10) angeordnet ist, dass der erste Temperaturfühler (11) eine Temperatur an einem ersten Messpunkt des Messwandlers (10), der zweite Temperaturfühler (12) eine Temperatur an einem zweiten Messpunkt des Messwandlers (10) und der dritte Temperaturfühler (13) eine Temperatur an einem dritten Messpunkt des Messwandlers (10) erfassen kann, wobei in Bezug zu einer ersten Seitenfläche des Messwandlers (10) der zweite Messpunkt zwischen dem ersten und dritten Messpunkt liegt.

**11.** Herstellverfahren einer Komponente einer Vorrichtung (1) nach einem der Ansprüche 1 bis 10, wobei
- der Messwandler (10) an der Verbindungsstelle zur ersten und/oder zweiten Leitung (101,102) beschichtet oder plattiert wird und die erste und/oder zweite Leitung (101,102) an die beschichtete oder plattierte Verbindungsstelle des Messwandlers (10) gelötet wird,
- die erste und/oder zweite Leitung an der Verbindungsstelle zum Messwandler (10) plattiert wird und der Messwandler (10) an die plattierte Verbindungsstelle der ersten und/oder zweiten Leitung (101,102) geschweißt wird, oder
- ein erstes Plättchen zwischen dem Messwandler (10) und der ersten Leitung (101) angeordnet wird und der Messwandler (10) an eine Stelle des ersten Plättchen geschweißt wird und die erste Leitung (101) an eine andere Stelle des ersten Plättchen gelötet wird und/oder ein zweites Plättchen zwischen dem Messwandler (10) und der zweiten Leitung (102) angeordnet wird und der Messwandler (10) an eine Stelle des zweien Plättchen geschweißt wird und die zweite Leitung (102) an eine anderen Stelle des zweiten Plättchen gelötet wird,
so dass eine mechanische und elektrisch leitende Verbindung zwischen dem Messwandler und der ersten und/oder zweiten Leitung hergestellt wird.
